# EUROPEAN PATENT SPECIFICATION

(11) **EP 0 548 374 B1**
(45) Date of publication and mention of the grant of the patent: **07.10.1998**
(21) Application number: 92915028.2
(22) Date of filing: 07.07.1992
(51) Int. Cl.: H04N 1/04, H04N 1/00

(54) **PRINTER FITTED WITH IMAGE READER**
DRUCKER MIT BILDLESER
IMPRIMANTE EQUIPEE D'UN LECTEUR D'IMAGE

(30) Priority: 09.07.1991 JP 52909/91 U; 14.08.1991 JP 64456/91 U
(43) Date of publication of application: 30.06.1993
(73) Proprietor: Oki Electric Industry Company, Limited, Tokyo 105 (JP)
(72) Inventor: KOJIMA, Tetsuji, Oki Electric Industry Co., Ltd., Tokyo 105 (JP); MIYASHITA, Hiromi, Oki Electric Industry Co., Ltd, Tokyo 105 (JP); HAGIWARA, Shigemi, Oki Electric Industry Co., Tokyo 105 (JP); SUNAGA, Naoki, Oki Electric Industry Co., Ltd., Tokyo 105 (JP)
(74) Representative: Read, Matthew Charles
(86) International application number: PCT/JP92/00866
(87) International publication number: WO 93/01679

(56) References cited:
- JP-A- 2 285 764
- JP-A-62 154 954
- JP-A-63 151 170
- JP-U-63 102 357

## Description

The present invention relates to a printer provided with an image reading unit.

Image reading units are known in which a conventional hand scanner, which manually reads image information on a document, is detachably mounted on an automatic document feeder.

Such an image reading unit is described in Japanese Patent Laid-Open Publication No. JP-A-61-184044. This invention discloses a device which may be used both as a hand scanner and as a fixed image reading device for reading documents delivered to it, by adding apparatus capable of conveying documents to the image reading unit. However, this type of hand scanner based image reading unit requires an additional printing device or needs to be connected to a personal computer before printing can be performed.

Effort has therefore recently been put into producing an integral device capable of reading the image information on a document and printing out this image information, cf eg JP-A-63 151 170. It is the object of the present invention to provide a printer with an integral image reading unit which comprises a hand scanner for reading a document and an automatic document feeder on which the hand scanner is detachably mounted for automatically conveying a document, wherein a document jammed in the image reading unit can be easily removed.

The present invention provides a printer provided with an image reading unit comprising a hand scanner and an automatic document feeder, which comprises a paper supply roller and a separating roller which cooperate to feed a document on a paper supply path past the hand scanner, and on which document feeder the hand scanner is detachably mounted, the image reading unit being an integral part of the printer, characterised in that the hand scanner is mounted on a support member movable between a first operative position, in which the hand scanner is located close to said paper supply path to enable it to read documents fed along that path, and a second position away from the paper supply path to permit clearance of a paper jam, and in that said support member comprises means for moving the separating roller away from the paper supply roller, so that upon movement to the second position, the support member operates to move the separating roller away from the paper supply roller to provide access to the paper supply path.

In one embodiment of the invention, retaining means are provided to maintain the hand scanner in its first operative position. When these means are released, the support member is turned by biasing means such as a spring and is thus separated from the automatic document feeder and the separating roller is separated from the paper supply roller. As a result, a document jammed between the hand scanner and the automatic document feeder, or between the paper supply roller and the separating roller, can be easily removed.

So that the invention may be more fully understood, embodiments thereof will now be described by way of example with reference to the accompanying drawings, in which:
Fig. 1 is a perspective view of a printer provided with an image reading unit, according to the present invention;
Fig. 2 is a perspective view showing the printer provided with the image reading unit in which a scanner cover is open;
Fig. 3 is a schematic view of the printer provided with the image reading unit for explaining the function thereof;
Fig. 4 is a view for explaining in detail the image reading unit;
Fig. 5 is a plan view showing in detail the image reading unit;
Fig. 6 is a perspective view provided with the image reading unit, and;
Fig. 7 is a view for explaining in detail the image reading unit.

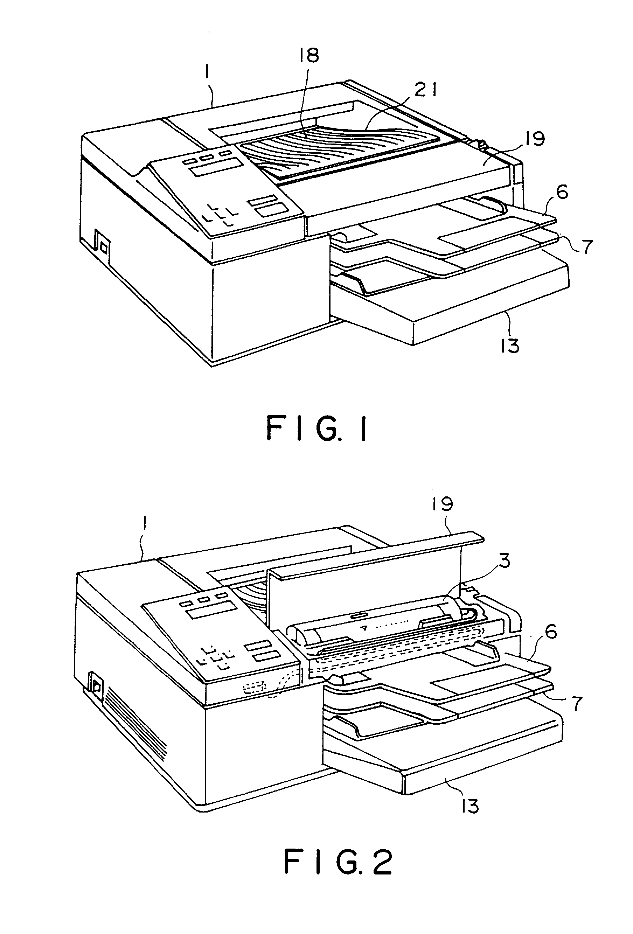

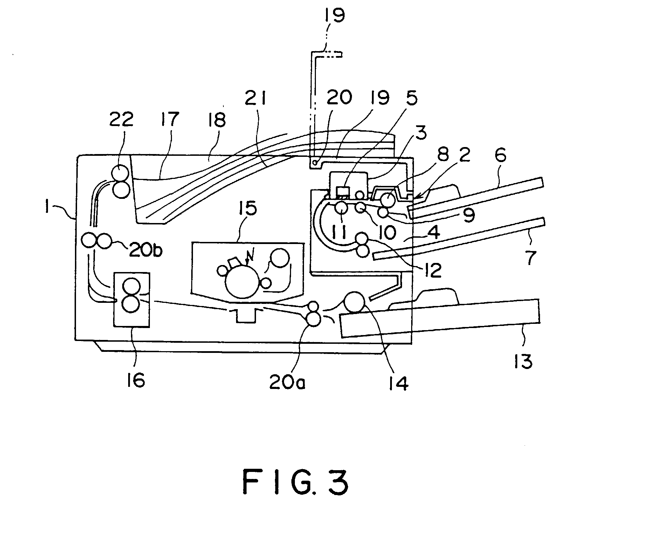

Figs. 1 and 2 are perspective views showing a printer provided with an image reading unit according to the present invention. Fig. 3 is a schematic view for explaining the printer provided with the image reading unit.

In Fig. 3, an image reading unit 2 is provided as an integral unit in the printer 1. The image reading unit 2 is composed of a hand scanner 3 and an automatic document feeder 4. The hand scanner 3 is provided with a reading sensor unit 5. The hand scanner 3 is easily detachable from the automatic document feeder 4. The automatic document feeder 4 comprises a paper supply tray 6, a paper discharge tray 7, a paper supply roller 8, a separating roller 9, conveying rollers 10 and 11 and a discharge roller 12.

A paper cassette 13 for accommodating printing papers therein is provided under the image reading unit 2 and a paper supply roller 14 is fixed above the reat end portion of the paper cassette 13. An image forming portion 15 is provided substantially at the center of the printer 1, in which each printing process such as light exposure, development, transfer etc. is performed according to an electrophotographic process. A fixing unit 16 is provided on the left of the image forming portion 15. A paper discharging portion 18 for discharging paper 17 after printing is performed thereon is formed in the upper portion of the printer 1. A scanner cover 19 is fixed above the image reading unit 2 turnably about the fulcrum 20 (in the state as illustrated in Fig. 2). The scanner cover 19 covers the upper portion of the image reading unit 2 to prevent obstructive matter from entering the image reading unit 2 when the scanner cover 19 is shut (in the state as illustrated in Fig. 1). Although the scanner cover 19 is opened when the hand scanner 3 is attached to or detached from the printer 1, obstructive matter is prevented from entering the image reading unit 2 by shutting the scanner cover 19 even when the hand scanner 3 is not attached to the printer 1. The upper surface of the scanner cover 19 is continuous to the stacking surface 21 of the paper discharging portion 18 in the upper portion of the printer 1 so the head portion of the paper 17 can be put on the upper surface of the scanner cover 19 when the paper 17 is discharged into the paper discharging portion 18.

As described above, the closable scanner cover 19 having the stacking surface of the printing paper thereon is provided in the printer and the image reading unit 2 including a detachable hand scanner 3 is provided under the scanner cover 19, so that the printer can be made small in size and light in weight.

An operation of reading an image on a document will be described with reference to Fig. 3 hereinafter. The document is put on the paper supply tray 6 and fed sheet by sheet by the paper supply roller 8 and the separating roller 9. The fed document is conveyed to the reading sensor unit 5 by way of the conveying roller 10, where the image information is read as the document is pressed against the reading sensor unit 5 by the conveying roller 11. The document is reversed in its conveying direction after reading and is discharged on the paper discharge tray 7 by the discharge roller 12.

When printing is performed on the paper, the paper supply roller 14 is rotated in response to the instruction from a high-ranking device, not shown, so as to feed the paper sheet by sheet from the paper cassette 13. The fed paper is conveyed to the image forming portion 15 by a conveying roller 20a, where the image is transferred thereon by the electrophotographic process according to image information supplied from a high-ranking device, not shown. The image transferred onto the paper is fixed in a fixing unit 16, and thereafter the paper 17 is discharged into the paper discharging portion 18 by a conveying roller 20b and a discharging roller 22.

The image reading unit 2 will be further described in detail.

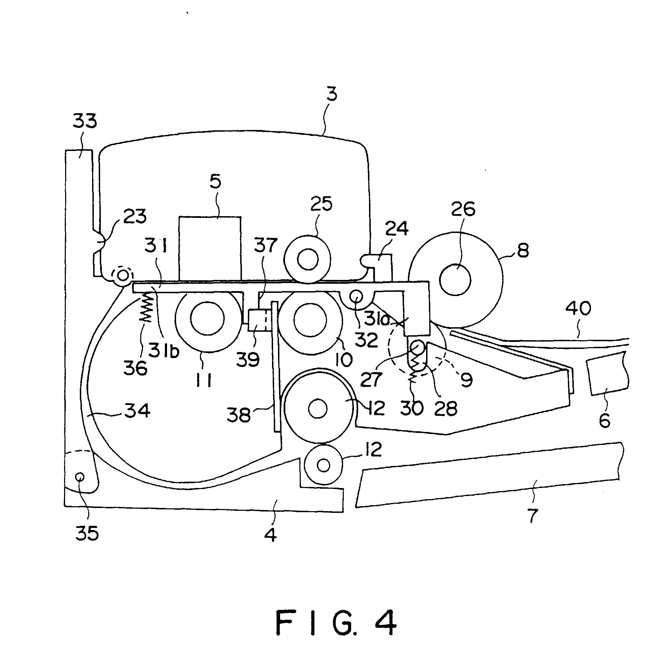

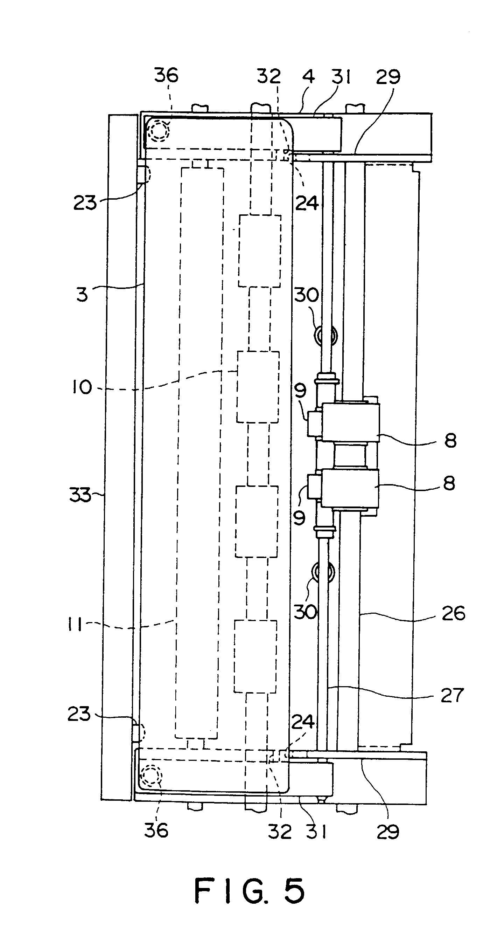

Fig. 4 is a view for explaining the image reading unit in detail and Fig. 5 is a plan view showing the image reading unit in detail. In the figures, the hand scanner 3 is fixedly positioned to the automatic document feeder 4 by latches 23 and 24. The hand scanner 3 is provided with a sensor unit for reading images on the document and a guide roller 25 therein. A paper supply roller 8 for feeding document is rotatably fixed to the automatic document feeder 4 by way of a shaft 26, and a separating roller 9 is rotatably fixed to the automatic document feeder 4 diagonally to the lower position of the paper supply roller 8 by way of a shaft 27. The shaft 27 is movable along a long groove 28 as illustrated in Fig. 4. The long groove 28 is formed in the frame 29 as illustrated in Fig. 5. An end of a spring 30 engages the shaft 27 so as to press the separating roller 9 against the paper supply roller 8 by its resilience.

A support member 31 is fixed in the upper portion of the automatic document feeder 4 in such a way as to be turnable about a supporting shaft 32. The support member 31 is attached to the automatic document feeder 4 at both end portions thereof, and the hand scanner 3 is mounted on the support member 31 and is fixedly positioned thereto by left and right latches 23 and 24. The latch 23 is formed on a guide member 33. The guide member 33 forming the outer side of a document discharge path 34 of the automatic document feeder 4 extends to the position where the hand scanner 3 is fixed to the automatic document feeder 4 and is turnable about a fulcrum 35.

The support member 31 has substantially an L shape as illustrated in Fig. 4, and is positioned close to the upper portion of the shaft 27 of the separating roller 9 at the front end portion 31a thereof. A spring 36 is provided under the reat end portion 31b of the support member 31 for biasing the reat end portion 31b upward. A shading plate 37 is integrally formed with the support member 31. The automatic document feeder 4 comprises a printed circuit board 38, on which a photosensor 39 composed of light-emitting and light-receiving elements is mounted. Accordingly, the shading plate 37 enters between the light-emitting and light-receiving elements of the photosensor 39 when the hand scanner 3 is attached to the image reading unit 2 as illustrated in Fig. 4 so as to intercept the light path, whereby the hand scanner 3 is detected as it is mounted on the image reading unit 2.

The reading operation of this embodiment is performed as follows. Referring to Fig. 4, first a document 40 on the paper supply tray 6 is drawn out by the clockwise rotation of the paper supply roller 8 and is separated sheet by sheet by the separating roller 9 which presses on the document 40. Thereafter, the document 40 is conveyed as it is clamped by the conveying roller 10 and the guide roller 25, and is further conveyed to the portion under the reading sensor unit 5 by way of the conveying roller 11, where the reading sensor unit 5 reads the image information on the document 40. After the completion of reading, the document 40 enters the document discharge path 34 and is discharged on the paper discharge tray 7 by way of the discharge roller 12.

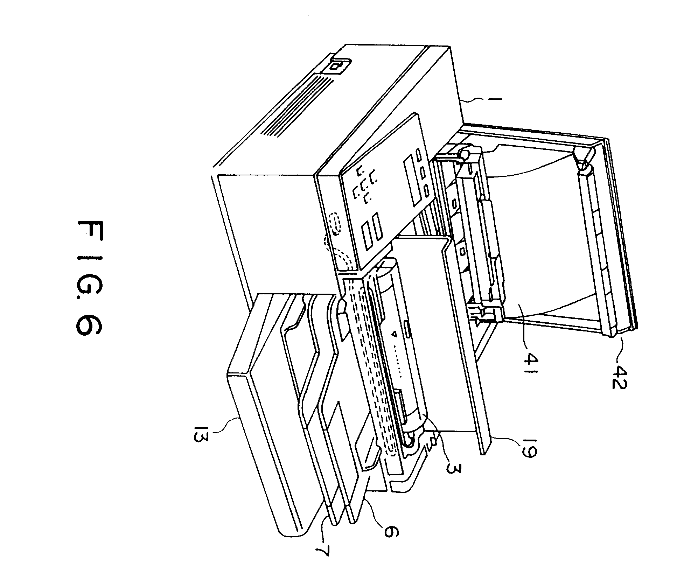

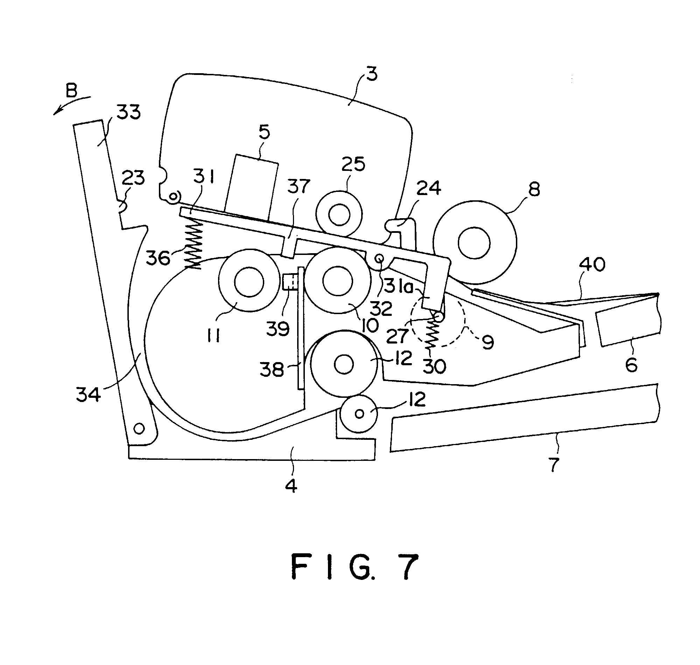

When the document 40 is jammed in transit, at first the upper cover 42 containing the printing unit 42 therein is opened as illustrated in Fig. 6. Thereafter the guide member 33 is turned in the direction of the arrow B as illustrated in Fig. 7, so that the latch 23 comes off the hand scanner 3. This causes the scanner hopper 31 to be turned clockwise about the supporting shaft 32 with the hand scanner 3 mounted thereon as it is pressed upward by the spring 36. The hand scanner 3 is also turned clockwise about the latch 24, so that a gap is formed between the hand scanner 3 and the automatic document feeder 4 and the conveying rollers 10 and 11 are disengaged from the guide roller 25 and the reading sensor unit 5 respectively. As a result, the document 40 jammed between the hand scanner 3 and the automatic document feeder 4 can be easily removed. Furthermore, the document 40 jammed in the document discharge path 34 can be also removed with ease by opening the guide member 33 in the direction of the arrow B.

Still further, the front end portion 31a of the support member 31 contacts the shaft 27 thereby pressing down the same against the pressure of the spring 30 by the clockwise turning of the support member 31. As a result, the separating roller 9 is separated from the paper supply roller 8 as illustrated in Fig. 7. Accordingly, in case that the document 40 is jammed between the separating roller 9 and the paper supply roller 8, it can be easily removed.

## Claims

1. A printer (1) provided with an image reading unit (2) comprising a hand scanner (3) and an automatic document feeder (4), which comprises a paper supply roller (8) and a separating roller (9) which cooperate to feed a document on a paper supply path past the hand scanner, and on which document feeder the hand scanner is detachably mounted, the image reading unit being an integral part of the printer, characterized in that the hand scanner (3) is mounted on a support member (31) movable between a first operative position, in which the hand scanner is located close to said paper supply path to enable it to read documents fed along that path, and a second position away from the paper supply path to permit clearance of a paper jam, and in that the support member (31) comprises means for moving the separating roller (9) away from the paper supply roller (8), so that upon movement to the second position, the support member operates to move the separating roller (9) away from the paper supply roller (8) to provide access to the paper supply path.

2. A printer as claimed in claim 1 wherein the support member (31) is rotatably mounted on the said document feeder (4) by way of a shaft (32) .

3. A printer as claimed in claim 1 or 2 including biasing means (36) at one end of the support member (31).

4. A printer as claimed in claim 3 wherein the biasing means comprise a spring.

5. A printer as claimed in any one of the preceding claims including means for mounting the separating roller (9) on the document feeder (4), wherein the means for moving the separating roller away from the supply roller (8) comprise an extension (31a) towards the end of the support member nearest the separating roller, to engage with the mounting means.

6. A printer as claimed in claim 5 wherein the mounting means comprise a shaft (27).

7. A printer as claimed in any one of the preceding claims including a guide member (33) mounted on the document feeder (4) and movable between a first operative position, in which it forms a curved outer portion of the document discharge path (34) in said document feeder and a second position away from the document discharge path to permit access to that path.

8. A printer as claimed in any one of the preceding claims wherein releasable retaining means (23) are provided to maintain the hand scanner (3) in its first operative position.

9. A printer as claimed in claim 8 wherein the retaining means (23) are formed on one end portion of the said guide member (33).

10. A printer as claimed in any one of the preceding claims, wherein a closable cover (19) is mounted on the printer to cover the hand scanner (3), such that the upper surface of the said cover forms part of the paper discharging portion (18) of the printer where printed paper is delivered.

## Patentansprüche

1. Drucker (1) mit einer Bild-Leseeinheit (2), die folgendes aufweist: einen Handleser (3) und einen automatischen Dokumenteneinzug (4), der eine Papierzuführungswalze (8) und eine Trennwalze (9) aufweist, die zusammenarbeiten, um ein Dokument auf einem Papierzuführungsweg am Handleser vorbei zuzuführen, wobei der Handleser auf dem Dokumenteneinzug abnehmbar angebracht ist, und die Bild-Leseeinheit ein integrierter Teil des Druckers ist, dadurch gekennzeichnet, daß der Handleser (3) auf einem Trägerteil (31) angebracht ist, das zwischen einer ersten Betriebsposition, bei der der Handleser nahe beim Papierzuführungsweg angeordnet ist, um ihm zu ermöglichen, Dokumente, die entlang dieses Wegs zugeführt werden, zu lesen, und einer zweiten Position, die weiter vom Papierzuführungsweg weg ist, um die Beseitigung eines Papierstaus zu ermöglichen, bewegbar ist, wobei das Trägerteil (31) eine Vorrichtung aufweist, um die Trennwalze (9) von der Papierzuführungswalze (8) wegzubewegen, so daß nach dem Bewegen in die zweite Position das Trägerteil die Trennwalze (9) von der Papierzuführungswalze (8) wegbewegt, um Zugang zum Papierzuführungsweg zu ermöglichen.

2. Drucker nach Anspruch 1, wobei das Trägerteil (31) mittels einer Welle (32) drehbar auf dem Dokumenteneinzug (4) angebracht ist.

3. Drucker nach Anspruch 1 oder 2, der eine Vorspannungsvorrichtung (36) an einem Ende des Trägerteils (31) aufweist.

4. Drucker nach Anspruch 3, wobei die Vorspannungsvorrichtung eine Feder aufweist.

5. Drucker nach einem der vorhergehenden Ansprüche, der eine Vorrichtung zum Anbringen der Trennwalze (9) am Dokumenteneinzug (4) aufweist, wobei die Vorrichtung zum Wegbewegen der Trennwalze von der Papierzuführungswalze (8) einen Vorsprung (31a) zum Ende des Trägerteils hin in nächster Nähe der Trennwalze aufweist, der in die Anbringvorrichtung eingreift.

6. Drucker nach Anspruch 5, wobei die Anbringvorrichtung eine Welle (27) aufweist.

7. Drucker nach einem der vorhergehenden Ansprüche, der ein Führungsteil (33) aufweist, das auf dem Dokumenteneinzug (4) angebracht ist und zwischen einer ersten Betriebsposition, in der es einen gekrümmten Außenabschnitt des Dokumentenausgabewegs (34) im Dokumenteneinzug bildet, und einer zweiten Position, die vom Dokumentenausgabeweg weiter weg ist, um Zugang zu diesem Weg zu ermöglichen, bewegbar ist.

8. Drucker nach einem der vorhergehenden Ansprüche, wobei entriegelbare Haltevorrichtungen (23) vorgesehen sind, um den Handleser (3) in seiner ersten Betriebsposition zu halten.

9. Drucker nach Anspruch 8, wobei die Haltevorrichtungen (23) auf einem Endabschnitt des Führungsteils (33) ausgebildet sind.

10. Drucker nach einem der vorhergehenden Ansprüche, wobei eine schließbare Abdeckung (19) auf dem Drucker angebracht ist, um den Handleser (3) abzudecken, so daß die obere Oberfläche der Abdeckung Teil der Papierausgabe (18) des Druckers bildet, wo gedrucktes Papier ausgegeben wird.

## Revendications

1. Imprimante (1) équipée d'une unité (2) de lecture d'images, comprenant un scanner manuel (3) et un dispositif (4) d'amenée automatique de document, qui comprend un rouleau d'alimentation en papier (8) et un rouleau de séparation (9), qui coopèrent de manière à faire avancer un document sur un trajet d'alimentation en papier devant le scanner manuel, et sur lequel dispositif d'amenée de document le scanner manuel est monté de façon amovible, l'unité de lecture d'images faisant partie intégrante de l'imprimante, caractérisée en ce que le scanner manuel (30) est monté sur un élément de support (31) déplaçable entre une première position de fonctionnement, dans laquelle le scanner manuel est situé à proximité dudit trajet d'alimentation en papier pour lui permettre de lire des documents avancés le long de ce trajet, et une seconde position éloignée du trajet d'alimentation en papier pour permettre de supprimer un bourrage du papier, et en ce que l'élément de support (31) comporte des moyens pour écarter le rouleau de séparation (9) du rouleau d'alimentation en papier (8) de sorte que, lors du passage vers la seconde position, l'élément de support agit de manière à écarter le rouleau de séparation (9) du rouleau d'alimentation en papier (8) pour permettre l'accès au trajet d'alimentation en papier.

2. Imprimante selon la revendication 1, dans laquelle l'élément de support (31) est monté rotatif sur ledit dispositif (4) d'amenée de document, par l'intermédiaire d'un arbre (32).

3. Imprimante selon la revendication 1 ou 2, comportant des moyens de sollicitation (36) situés à une extrémité de l'élément de support (31).

4. Imprimante selon la revendication 3, dans laquelle les moyens de sollicitation comprennent un ressort.

5. Imprimante selon l'une quelconque des revendications précédentes comprenant des moyens pour monter le rouleau de séparation (9) sur le dispositif d'amenée de document (4), les moyens servant à écarter le rouleau de séparation du rouleau d'alimentation (8) comprenant un prolongement (31a) qui s'étend en direction de l'extrémité de l'élément de support le plus proche du rouleau de séparation, pour coopérer avec les moyens de montage.

6. Imprimante selon la revendication 5, dans laquelle les moyens de montage comprennent un arbre (27).

7. Imprimante selon l'une quelconque des revendications précédentes, comprenant un élément de guidage (33) monté sur le dispositif (4) d'amenée de document et déplaçable entre une première position de fonctionnement, dans laquelle il forme une partie extérieure courbe du trajet (34) de déchargement du document dans ledit dispositif d'amenée de document, et une seconde position éloignée du trajet de déchargement du document de manière à permettre l'accès à ce trajet.

8. Imprimante selon l'une quelconque des revendications précédentes, dans lequel des moyens de retenue amovibles (23) sont prévus de manière à maintenir le scanner manuel (3) dans sa première position de fonctionnement.

9. Imprimante selon la revendication 8, dans lequel les moyens de retenue (23) sont formés sur une première extrémité dudit élément de guidage (33).

10. Imprimante selon l'une quelconque des revendications précédentes, dans laquelle un capot (19) pouvant être fermé est monté sur l'imprimante pour recouvrir le scanner manuel (3), de telle sorte que la surface supérieure dudit capot fait partie de la partie (18) de déchargement du papier de l'imprimante, dans laquelle le papier est délivré.
